# EUROPÄISCHE PATENTSCHRIFT

(11) **EP 2 236 886 B1**
(45) Veröffentlichungstag und Bekanntmachung des Hinweises auf die Patenterteilung: **08.07.2015**
(21) Anmeldenummer: 10157236.0
(22) Anmeldetag: 22.03.2010
(51) Int. Cl.: F16L 3/23, H02G 3/32

(54) **Installationsteil**
Installation part
Elément d'installation

(30) Priorität: 01.04.2009 DE 202009002019 U
(43) Veröffentlichungstag der Anmeldung: 06.10.2010
(73) Patentinhaber: OBO Bettermann GmbH & Co. KG, 58710 Menden (DE)
(72) Erfinder: Haidtner, Medard, 58710 Menden (DE); Sparenberg, Martin, 58710 Menden (DE)
(74) Vertreter: Haverkamp, Jens

(56) Entgegenhaltungen:
- EP-A1- 1 180 838
- DE-U1- 9 109 806
- FR-A1- 2 010 049
- US-A- 3 971 105
- US-B1- 7 162 790

## Beschreibung

Die Erfindung betrifft ein Installationsteil zum Halten von Installationsleitungen mit einer zumindest bereichsweise hinterschnittenen Adapternut zum Anschließen eines Befestigungsadapters an das Installationsteil zur Montage desselben an einem Befestigungsgrund und mit einem daran unter Zwischenschaltung wenigstens eines flexiblen Streifens gelenkig angeformten Befestigungsadapter, welcher Befestigungsadapter über einen Verriegelungsschuh zum Einsetzen in die Adapternut des Installationsteils verfügt oder als solcher ausgebildet ist, in welcher Adapternut der Verriegelungsschuh formschlüssig in Lastaufnahmerichtung gehalten ist.

Zum Verlegen von Installationsleitungen, beispielsweise elektrischen oder sanitären Installationsleitungen, werden verschiedene Installationsteile verwendet. Bei elektrischen Installationen kann es sich beispielsweise um Kabelhalter zum individuellen Anbringen oder Halten eines einzelnen Kabels handeln. Zum Halten von mehreren elektrischen Leitungen oder auch von anderen Installationsleitungen werden, wenn diese gebündelt zu verlegen sind, auch Sammelhalterungen verwendet. Diese sind nach Art einer öffnenbaren Schelle konzipiert und fassen die zu verlegenden Leitungen nach Art eines Ringes ein. Derartige Sammelhalterungen sind üblicherweise als rechteckförmiger Ring konzipiert, dessen dem Rücken der Sammelhalterung gegenüberliegender Schenkel zum Öffnen und Schließen der Sammelhalterung als Verschlussschenkel ausgebildet ist. Dieser trägt an seinem freien Ende ein erstes Teil eines Rastverschlusses, das mit einem zu diesem ortsfest gehaltenen zweiten Teil zum Verschließen der Sammelhalterung zusammenwirkt. Derartige Sammelhalterungen werden orientiert montiert, und zwar in einer Anordnung, dass der Rastverschluss oben liegend angeordnet ist. Sammelhalterungen verfügen zusätzlich typischerweise im Bereich ihres Rückens sowie im Bereich ihres oberen Quersteges über Mittel zum Anschließen eines Befestigungsadapters, mit dem die Sammelhalterung wand- oder deckenseitig befestigt werden kann. Derartige Befestigungsadapter werden eingesetzt, wenn eine unmittelbare Montage der Sammelhalterung an einer Wand oder einer Decke nicht gewünscht oder nicht möglich ist.

Eine solche Sammelhalterung ist aus DE 91 09 806 U1 bekannt. Bei dieser Sammelhalterung ist der Befestigungsadapter unter Zwischenschaltung von zwei flexiblen Streifen an das Installationsteil angeformt. Durch die beiden flexiblen Streifen ist der Befestigungsadapter unverlierbar mit dem als Sammelhalterung ausgebildeten Installationsteil verbunden. Die Sammelhalterung verfügt im Bereich ihres oberen Quersteges sowie im Bereich ihres Rückens über eine Adapternut. Die flexiblen Streifen weisen eine Länge auf, dass der Befestigungsadapter ohne weiteres mit seinem Verriegelungsschuh in die oberseitig offene Adapternut des Quersteges oder die rückseitig offene Adapternut des Rückenschenkels einsetzbar ist. Damit bei einer Montage der Sammelhalterung, bei der der Befestigungsadapter mit seinem Verriegelungsschuh in die Adapternut des Rückenschenkels eingesetzt ist, die beiden flexiblen Streifen die Befestigung nicht beeinträchtigen, ist der Rückenschenkel entsprechend verkröpft, um eine Aufnahme für die flexiblen Streifen bereitzustellen.

Eine solche Sammelhalterung hat zwar den Vorteil, dass der Befestigungsadapter unverlierbar an der Sammelhalterung angeformt ist, jedoch ist die Handhabung der Sammelhalterung mitunter umständlich, da die typischerweise gefalteten flexiblen Streifen störend wirken können. Überdies besteht bei dieser Sammelhalterung nicht die Möglichkeit, zwei Sammelhalterungen in einer Rücken-an-Rücken-Anordnung miteinander zu verbinden.

Ausgehend von diesem Stand der Technik liegt der Erfindung daher die Aufgabe zugrunde, ein Installationsteil, beispielsweise ausgebildet als Sammelhalterung für Installationsleitungen der eingangs genannten Art dergestalt weiterzubilden, dass eine Handhabung unter zumindest weitestgehender Vermeidung der zu dem Stand der Technik aufgezeigten Nachteile verbessert ist.

Gelöst wird diese Aufgabe erfindungsgemäß durch ein eingangs genanntes, gattungsgemäßes Installationsteil, bei dem der Befestigungsadapter durch den zumindest einen flexiblen Streifen dergestalt an das Installationsteil angeschlossen und der flexible Streifen eine solche Länge aufweist, dass die Länge des flexiblen Streifens eine Schwenkbewegung zwischen dem Installationsteil und dem Befestigungsadapter zulässt, in deren Zuge das Installationsteil zur Ausbildung einer Abstützanordnung zur Anlage an dem Verriegelungsschuh gelangt, bei welcher Abstützanordnung das Installationsteil einen zweiarmigen Hebel bildet, an dessen einem Arm der zumindest eine flexible Streifen angeformt ist und dieser bei weiterem Schwenken des Installationsteils gegenüber dem Befestigungsadapter zum Abtrennen desselben von dem Befestigungsadapter unter Zugspannung stellbar ist.

Bei diesem Installationsteil ist der Befestigungsadapter über zumindest einen, beispielsweise als Filmscharnier ausgebildeten flexiblen Streifen an das Installationsteil angeschlossen und zwar in einer Art und Weise, bedingt durch die Anordnung von Installationsteil und Befestigungsadapter zueinander sowie die Länge des flexiblen Streifens, dass das Installationsteil ohne weiteres von dem Befestigungsadapter getrennt werden kann. Dieses wird ermöglicht, wenn der flexible Streifen verglichen mit denjenigen des Standes der Technik relativ kurz ist und wenn das Installationsteil bei einer Verschwenkbewegung gegenüber dem bereits am Befestigungsgrund festgelegten Befestigungsadapter mit einer seiner Flächen zur Anlage an dem Befestigungsadapter, insbesondere seinem Verriegelungsschuh zur Anlage gebracht wird. Bei dieser Anlage zwischen Installationsteil und der Befestigungsadapter sind die Ebenen der beiden aneinander anliegenden Oberflächen winklig zueinander ausgerichtet, so dass sich das Installationsteil etwa an einer Kante des Befestigungsadapters abstützt und dieses sodann nach Art eines zweiarmigen Hebels abgestützt ist. An dem einen Arm des zweiarmigen Hebels ist der flexible Streifen angeformt. Dabei ist die Länge des Streifens so gewählt, dass bei einer solchen winkligen Anordnung von Installationsteil und Befestigungsadapter der zumindest eine flexible Streifen gespannt ist und durch diesen grundsätzlich eine weitere Verschwenkbewegung, in deren Zuge die aneinander anliegenden Flächen in eine parallele Anordnung zueinander gebracht werden sollen, nicht zugelassen ist. Dieses wird ausgenutzt, um bei einem weiteren Verschwenken des Installationsteils gegenüber dem Befestigungsadapter den zumindest einen flexiblen Streifen unter Zugspannung zu stellen und zwar dergestalt, dass der Befestigungsadapter von dem Installationsteil getrennt werden kann. Zu diesem Zweck kann der zumindest eine flexible Streifen eine Sollbruchstelle aufweisen. Eine solche Sollbruchstelle kann in unmittelbaren Übergang zwischen dem flexiblen Streifen und dem Befestigungsadapter, an dem Übergang zwischen dem zumindest einen flexiblen Streifen an das Installationsteil oder in einem Bereich zwischen diesen beiden Übergängen angeordnet sind. Da das Installationsteil verglichen mit dem Befestigungsadapter typischerweise deutlich größer ist, wird der Arm des durch die Abstützanordnung gebildeten zweiarmigen Hebels, an dem der zumindest eine flexible Streifen nicht angeformt ist, länger sein als der Arm, an dem der Streifen angeformt ist. Infolge dessen ist es ohne weiteres möglich, eine zum Abtrennen des Befestigungsadapters von dem Installationsteil notwendige Kraft auf den flexiblen Streifen aufzubringen. Dieses und die durch die vorbeschriebene Abstützanordnung beschriebene Möglichkeit des Aufbringens hinreichender Trennkraft ermöglicht eine Ausgestaltung, bei der der flexible Streifen hinreichend steif ist, dass der Befestigungsadapter in einer von dem Installationsteil abragenden Stellung gehalten werden kann. Dieses ist zweckmäßig, da dann zum Montieren des Befestigungsadapters an einem Befestigungsgrund nicht der Befestigungsadapter festgehalten werden müsste, sondern dass typischerweise eine größere Oberfläche und daher einen besseren Griffgrund aufweisende Installationsteil. Ist dieses beispielsweise als Sammelhalterung ausgebildet, kann diese zur Montage des Befestigungsadapters an ihrem vorderseitigen Verschlussschenkel nach Art eines Griffes gehalten werden, um den Befestigungsadapter wand- oder deckenseitig festzulegen. Ist der Befestigungsadapter wand- oder deckenseitig festgelegt, wird das Installationsteil durch Ausüben der vorbeschriebenen Schwenkbewegung gegenüber dem Befestigungsadapter verschwenkt und von diesem getrennt. Anschließend wird die Adapternut des Installationsteils in Eingriff mit dem Verriegelungsschuh des Befestigungsadapters gebracht, womit die Sammelhalterung montiert ist.

Um den Befestigungsadapter gegenüber dem Installationsteil hinreichend verdrehgesichert zu halten, bietet es sich an, zwei mit Abstand zueinander angeordnete flexible Streifen vorzusehen, unter deren Zwischenschaltung der Befestigungsadapter an dem Installationsteil angeformt ist.

Ein solches Installationsteil, beispielsweise ausgebildet als Sammelhalterung ist vorzugsweise ein im Wege eines Kunststoffspritzgussverfahrens hergestelltes Kunststoffteil.

Weitere Vorteile der Erfindung ergeben sich auch aus der nachfolgenden Beschreibung eines Ausführungsbeispieles unter Bezugnahme auf die beigefügten Figuren. Es zeigen:
- **Fig. 1:**: eine perspektivische Ansicht einer Sammelhalterung als Installationsteil,
- **Fig. 2:**: eine vergrößerte perspektivische Ansicht der Sammelhalterung der Figur 1 mit Blick auf den oberen Bereich der Rückseite derselben,
- **Fig. 3:**: eine Seitenansicht der Sammelhalterung der Figur 1 mit dem an einer Wand festgelegten Befestigungsadapter in einer Stellung des Installationsteils zum Abtrennen desselben von dem Befestigungsadapter und
- **Fig. 4:**: eine Längsschnittdarstellung durch den Rückenschenkel der Sammelhalterung mit dem in eine in diesen eingebrachte Adapternut eingesetzten Befestigungsadapter.

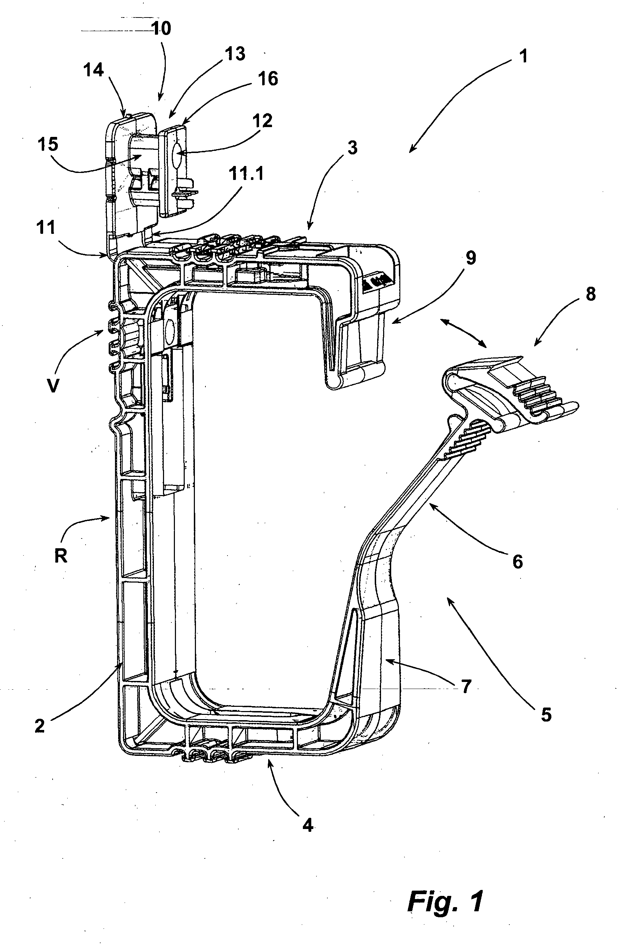

Ein als Sammelhalterung 1 ausgebildetes Installationsteil dient zum Halten von Installationsleitungen, insbesondere von elektrischen Installationsleitungen. Selbstverständlich kann die Sammelhalterung 1 auch zum Halten anderer Installationsleitungen, wie beispielsweise von Rohren, Datenleitungen oder dergleichen dienen. Die Sammelhalterung 1 wird zum Halten von derartigen Installationsleitungen wand- oder deckenseitig befestigt. Die Sammelhalterung ist nach Art eines öffnenbaren Ringes konzipiert. Bei dem dargestellten Ausführungsbeispiel wird die Sammelhalterung 1 durch einen etwa rechteckförmigen Körper gebildet. Dieser umfasst einen Rückenschenkel 2, einen oberen Quersteg 3, einen unteren Quersteg 4 und einen den vorderen Schenkel bildenden Verschlussschenkel 5. Der Verschlussschenkel 5 verfügt über einen Verschlussabschnitt 6, der gegenüber einem an dem unteren Quersteg 4 angeformten Schenkelteil 7 materialelastisch, wie durch den Doppelpfeil in Figur 1 angedeutet, verstellbar ist. An seinem freien Ende trägt der Verschlussschenkel 5 ein erstes Teil eines an sich bekannten Rastverschlusses, dessen komplementäres zweites Verschlussteil 9 an dem freien Ende des oberen Quersteges 3 in Richtung zum Quersteg 4 abragend angeformt ist. Figur 1 zeigt die Sammelhalterung 1 mit geöffnetem Verschlussabschnitt 6. In der Geschlossenstellung der Sammelhalterung sind die beiden Verschlussteile 8, 9 zum Schließen des Ringkörpers miteinander in Eingriff gestellt.

An den oberen Abschluss des Rückenschenkels 2 angeformt ist ein Befestigungsadapter 10, der bei dem dargestellten Ausführungsbeispiel über zwei Filmscharniere 11, 11.1 mit der Rückseite R des Rückenschenkels 2 verbunden ist. Der Befestigungsadapter dient zum wand- bzw. deckenseitigen Montieren der Sammelhalterung 1. Die Filmscharniere 11, 11.1 sind ausgebildet, damit der Befestigungsadapter 10 zwar gelenkig mit der Sammelhalterung 1 verbunden ist, gleichwohl sind die Filmscharniere 11, 11.1 hinreichend steif ausgeführt, dass der Befestigungsadapter 10 ohne Weiteres Zutun im Wesentlichen in der in Figur 1 gezeigten Stellung gegenüber der Sammelhalterung 1 verbleibt. Der Befestigungsadapter 10 verfügt über eine diesen durchgreifende Befestigungsöffnung 12, durch die zum Montieren des Befestigungsadapters 10 an einer Wand oder einer Decke oder einem sonstigen Befestigungsgrund ein Befestiger, beispielsweise eine Schraube hindurchgeführt werden kann. Der Befestigungsadapter 10 umfasst einen Verriegelungsschuh 13, mit dem dieser in eine der Sammelhalterung zugeordnete Adapternut eingreift und darin verrastet gehalten ist.

Der Verriegelungsschuh 13 des Befestigungsadapters 10 ist an eine Montageplatte 14 angeformt. Die Montageplatte 14 dient als Anlageplatte, die zum Anschließen an einen Befestigungsgrund mit ihrer Rückseite an diesem anliegt. Der Verriegelungsschuh 13 besteht aus einem Distanzstück 15 und einer das Distanzstück 15 überkragenden und an der der Montageplatte 14 gegenüberliegenden Seite angeformten Riegelplatte 16. Der Durchmesser des Distanzstückes 15 entspricht im wesentlichen der lichten Weite des nicht hinterschnittenen Teils einer Adapternut des Installationsteils, während die Riegelplatte 16 zum Eingreifen in den hinterschnittenen Teil einer solchen Adapternut konzipiert ist.

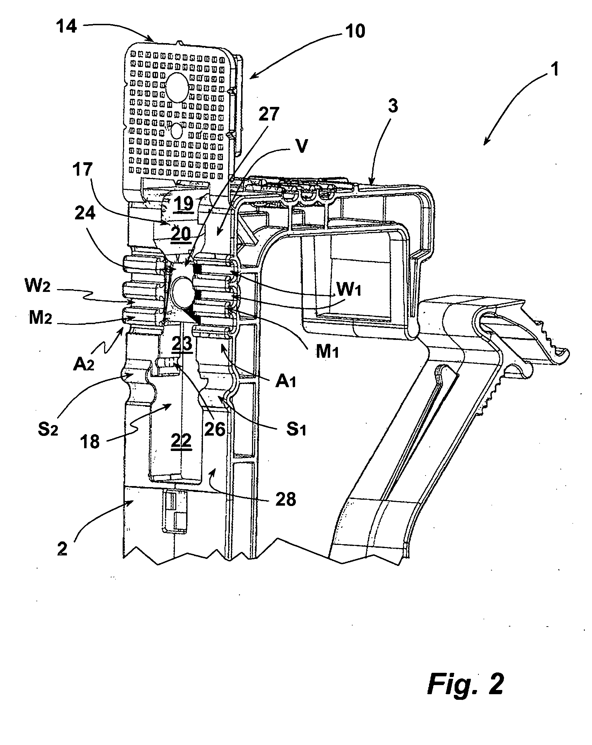

Die Sammelhalterung 1 verfügt ausgehend von der Rückseite R des Rückenschenkels 2 im Bereich ihres oberen Quersteges 3 über eine erste Adapternut 17 und über eine in den Rückenschenkel 2 eingebrachte zweite Adapternut 18. Die Anordnung der Adapternuten 17, 18 ist aus der Rückseitenansicht der Figur 2 der Sammelhalterung 1 erkennbar. Dieses gilt insbesondere für die Querschnittsgeometrie der Adapternut 17. Die Adapternut 17 folgt der Längserstreckung des Quersteges 3 und verfügt über einen Durchgriffsabschnitt 19 und einen an den Durchgriffsabschnitt 19 grenzenden Hinterschnitt 20. Die lichte Weite des Durchgriffsabschnittes 19 entspricht mit dem notwendigen Bewegungsspiel dem Durchmesser des Distanzstückes 15 des Verriegelungsschuhs 13. Die Riegelplatte 16 ist konzipiert, um in den Hinterschnitt 20 eingesetzt werden zu können. Die Adapternut 18 weist eine entsprechende Geometrie auf.

Der Befestigungsadapter 10 ist zum Zwecke einer vereinfachten Handhabung und für den Zweck seiner Montage an einem Befestigungsgrund an dem Rückenschenkel 2 mittels der Filmscharniere 11, 11.1 angeformt. Zum Handhaben der Sammelhalterung 1 beim Montieren des Befestigungsadapters 10 an einem Befestigungsgrund kann der Verschlussschenkel 5 mit seinem geschlossenen Verschlussabschnitt 6 als Griff einer Handhabe verwendet werden. Auf diese Weise kann der Befestigungsadapter 10 ohne weiteres gehalten werden, insbesondere auch mit Abstand zu dem Befestigungsadapter 10 selbst und damit beabstandet von beim Montieren des Befestigungsadapters 10 eingesetzten Werkzeugen.

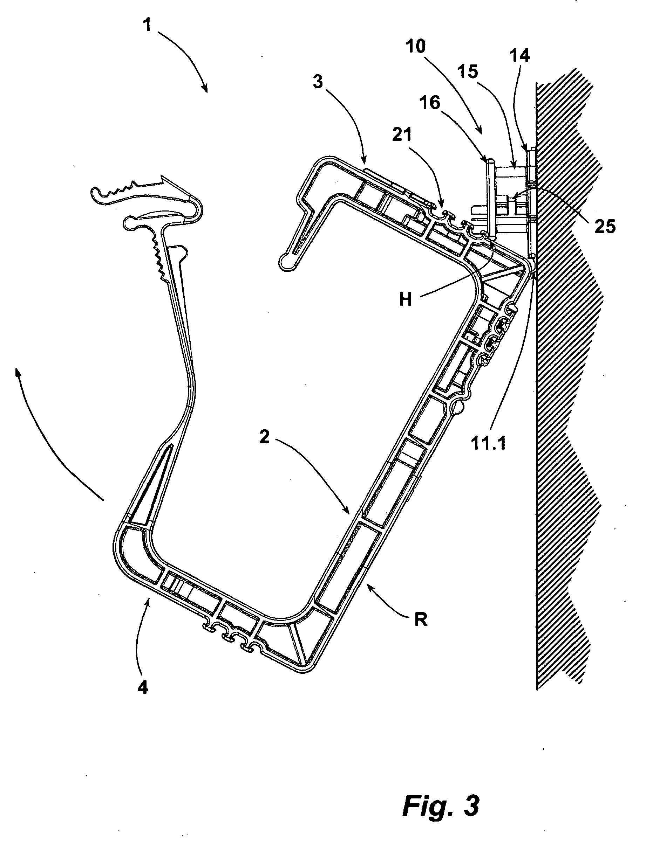

Ist der Befestigungsadapter 10 an einem Befestigungsgrund, beispielsweise einer Wand festgelegt, wird dieser von der Sammelhalterung 1 getrennt. Zu diesem Zweck wird die Sammelhalterung 1, wie aus Figur 3 erkennbar, aufwärts geschwenkt, so dass die Oberseite des oberen Quersteges 3 zur Anlage an der Riegelplatte 16 des Befestigungsadapters 10 gelangt. Bei dem dargestellten Ausführungsbeispiel verfügt der obere Quersteg 3 über eine Anreihkontur 21, bei der männliche und weibliche Verbinder in einer Wechselfolge zueinander angeordnet sind, wobei die männlichen Verbinder von der Oberseite mit ihrer halben Höhe abragen. Die einzelnen Elemente der Sammelhalterung 1 sowie des Befestigungsadapters 10 sind hinsichtlich ihrer Dimensionierung so aufeinander abgestimmt, dass bei diesem Verschwenken die Riegelplatte 16 in dem Übergang des dem Rückenschenkel 2 nächstkommenden männlichen Verbinders der Anreihkontur 21 und der Oberseite des Querschenkels 3 zur Anlage kommt. Das Installationsteil 1 stützt sich somit mit seinem oberen Querschenkel nach Art eines zweiarmigen Hebels an dem wandseitig festgelegten Befestigungsadapter 10 ab. Die Anlageanordnung zwischen der Riegelplatte 16 und der Oberseite des oberen Quersteges 3 stellt die Hebelachse H dar. An dem kürzeren Arm dieses zweiarmigen Hebels sind die Filmscharniere 11, 11.1 zur Verbindung des Installationsteils 1 mit dem Befestigungsadapter 10 angeformt. Wie aus Figur 3 erkennbar, ist die Länge der Filmscharniere 11, 11.1 derart bemessen, dass das Installationsteil 1 in die vorbeschriebene Abstützanordnung ohne weiteres verschwenkt werden kann. Bei einem weiteren Verschwenken der Sammelhalterung 1 entsprechend der in Figur 3 gezeigten Pfeilrichtung werden die Filmscharniere 11, 11.1 unter Zugspannung gestellt, so dass diese anschließend aufgrund einer Materialverjüngung im Bereich ihres Anschlusses an die Rückenseite R des Rückenschenkels 2 abreißen. Zu diesem Zweck kann die Sammelhalterung 1 an ihrem unteren Quersteg 4 oder auch im Bereich des Überganges von dem Quersteg 4 in den Rückenschenkel 2 ergriffen werden. Der Abstand dieser Angriffsstelle von der Hebelachse H ist deutlich größer als der Abstand des Ortes der Anbindung der Filmscharniere 11, 11.1 an das Installationsteil 1 von der Hebelachse H. Infolgedessen kann mühelos eine solche Kraft aufgewendet werden, die notwendig ist, um die beiden Filmscharniere 11, 11.1 von dem Installationsteil 1 abtrennen zu können. Ausgenutzt wird bei diesem Trennen, dass der Befestigungsadapter 10 wandseitig festgelegt ist.

Nach Abtrennen der Sammelhalterung 1 von ihrem Befestigungsadapter 10 wird die Sammelhalterung 1 an den Befestigungsadapter 10 aufgehängt, und zwar dadurch, dass der Verriegelungsschuh 13 bei dem dargestellten Ausführungsbeispiel in die in den Rückenschenkel 2 eingebrachte Adapternut 18 eingeführt wird. Da im Unterschied zu der Adapternut 17, die von der Rückseite R des Rückenschenkels 2 ausgehend konzipiert ist, die Adapternut 18 eine randseitige Mündung nicht aufweist, ist diese schlüssellochartig konzipiert und verfügt über einen Einsetzabschnitt 22, dessen lichte Weite hinreichend groß bemessen ist, dass die Riegelplatte 16 des Befestigungsadapters 10 eingesetzt werden kann. An den Einsetzabschnitt 22 grenzt ein hinsichtlich seiner lichten Weite kleinerer Verriegelungsabschnitt 23 (s. Figur 2). Die lichte Weite des Verriegelungsabschnittes 23 entspricht mit dem notwendigen Bewegungsspiel dem Durchmesser des Distanzstückes 15 des in die Adapternut 18 einzusetzenden Verriegelungsschuhs 13. Ein Steg 24 bildet gegenüber dem Distanzstück 15 einen oberen Anschlag, so dass die Sammelhalterung 1 mit ihrem Steg 24 auf der Oberseite des Distanzstückes 15 des Befestigungsadapters 10 aufliegt und eine Krafteinleitung auf diese Weise in den Befestigungsadapter 10 und sodann in die Wand hinein erfolgt.

Zum Verriegeln des in die Adapternut 18 eingesetzten Verriegelungsschuhs 13 trägt dieser an seinen beiden zu den den Verriegelungsabschnitt 23 bildenden Wänden weisenden Seiten jeweils als erstes Rastverriegelungselement einen Rastwulst 25 (vgl. Figuren 1 und 3). Der Verriegelungsabschnitt 23 der Adapternut 18 verfügt an seinen beiden Seitenwänden jeweils über komplementäre Rastausnehmungen 26, in die die Rastwülste 25 des Distanzstücks 15 zum Verriegeln des Befestigungsadapters 10 bzw. seines Verriegelungsschuhs 13 innerhalb der Adapternut 18 eingreifen. Die Adapternut 17 weist entsprechende Rastausnehmungen auf.

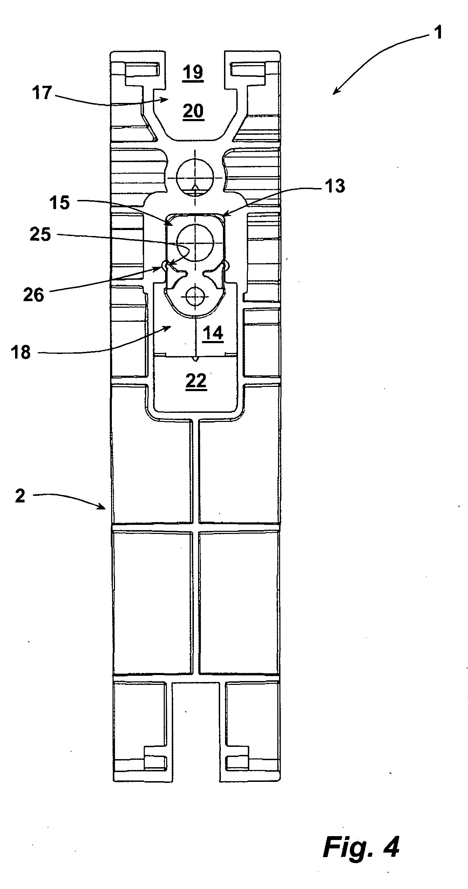

Der an den Rückenschenkel 2 der Sammelhalterung 1 angeschlossene Befestigungsadapter 10, dessen Verriegelungsschuh 13 in die Adapternut 18 eingreift, ist in Figur 4 in einem Schnitt gezeigt. Figur 4 zeigt das Distanzstück 15 in einem Querschnitt. Der Eingriff der Rastwülste 25 in die komplementären Rastausnehmungen 26 des Verriegelungsabschnittes 23 der Adapternut 18 ist deutlich, ebenso wie die Anlageanordnung des Distanzstückes 15 an dem Steg 24.

Die Beschreibung der Fixierung des Verriegelungsschuhs innerhalb der Adapternut mit den miteinander in Eingriff stehenden Verriegelungselementen macht deutlich, dass eine solche Verriegelung eines Befestigungsadapters bzw. seines Verriegelungsschuhs in einer solchen Nut auch unabhängig davon verwendet werden kann, ob der Befestigungsadapter, wie in den Ansprüche beschrieben, an das Installationsteil angeformt ist oder nicht.

Die Sammelhalterung 1 trägt auf der Rückseite R des Rückenschenkels 2 einen Verbindungsabschnitt V, der in einer vergrößerten Ansicht auf die Rückseite R des Rückenschenkels 2 in Figur 2 erkennbar ist. Der Verbindungsabschnitt V trägt, wie nachstehend erläutert, Anreihkonturen, mit denen die Sammelhalterung 1 mit einer zweiten, identischen Sammelhalterung, verbunden werden kann. Der Verbindungsabschnitt V des dargestellten Ausführungsbeispiels besteht aus zwei Anreihkonturabschnitten A₁, A₂, die durch eine Einsetznut 27 voneinander getrennt sind. Der Anreihkonturabschnitt A₁ besteht aus einer Wechselfolge männlicher und weiblicher Verbinder, wobei sich diese Wechselfolge in Richtung der Höhe des Rückenschenkels 2 erstreckt. Die weiblichen Verbinder W₁ sind als hinterschnittene Nuten ausgeführt. Bei den männlichen Verbindern M₁ handelt es sich um Pilzkopfstege mit einer zur Ausgestaltung der weiblichen Verbinder W₁ komplementären Geometrie. Bei dem dargestellten Ausführungsbeispiel geht die Wechselfolge aus männlichen und weiblichen Verbindern M₁, W₁ unmittelbar ineinander über, so dass jeweils ein weiblicher Verbinder W₁ von zwei männlichen Verbindern M₁ eingefasst wird. Infolge der bei dem dargestellten Ausführungsbeispiel vorgesehenen Wechselfolge sind die zwischen zwei weiblichen Verbindern W₁ angeordneten männlichen Verbinder M₁ zum Ausbilden jeweils eines dem benachbarten weiblichen Verbinder W₁ zugeordneten Hinterschnittes T- bzw. pilzkopfförmig ausgeführt. Die Längserstreckung der Verbinder M₁, W₁ erfolgt quer zur Längserstreckung des Rückenschenkels 2. Der Anreihkonturabschnitt A₂ ist ebenso aufgebaut wie der Anreihkonturabschnitt A₁ aus einer Wechselfolge von weiblichen und männlichen Verbindern W₂, M₂. Dabei sind die Verbinder M₂, W₂ des Anreihkonturabschnittes A₂ bezüglich ihrer Längserstreckung zu den Verbindern M₁, W₁ des Anreihkonturabschnittes A₁ versetzt und zwar dergestalt, dass mit jedem weiblichen Verbinder W₁ des Anreihkonturabschnittes A₁ ein männlicher Verbinder M₂ des Anreihkonturabschnittes A₂ fluchtet. Aufgrund der identischen Dimensionierung der weiblichen Verbinder W₂ sowie der männlichen Verbinder M₂ im Anreihkonturabschnitt A₂ mit den Verbindern M₁, W₁ des Anreihkonturabschnittes A₁ fluchten dementsprechend die weiblichen Verbinder W₂ des Anreihkonturabschnittes A₂ mit den männlichen Verbindern M₁ des Anreihkonturabschnittes A₁.

Die männlichen Verbinder M₁, M₂ ragen mit ihrer halben Höhe über die Oberseite 16 der Rückseite R des Rückenschenkels 2 ab. Mit Abstand zu dem jeweils zuunterst angeordneten Verbinder der Anreihkonturabschnitte A₁, A₂ befindet sich jeweils ein Stützwulst S₁, S₂, deren von der Oberfläche 28 abragende Höhe demjenigen Betrag entspricht, mit dem die männlichen Verbinder M₁, M₂ ebenfalls von der Oberfläche 28 abragen. Benachbart zu den Stützwülsten S₁, S₂ ist jeweils versetzt zueinander eine Wulstaufnahme vorgesehen.

Bei dem dargestellten Ausführungsbeispiel ist die Längserstreckung der Verbinder M₁, W₁, M₂, W₂ der beiden Anreihkonturabschnitte A₁, A₂ gleich. Die lichte Weite der Einsetznut 27 entspricht bei dem dargestellten Ausführungsbeispiel der Länge der Verbinder zuzüglich eines gewissen Bewegungsspiels.

Bei dem dargestellten Ausführungsbeispiel ist in der die Anreihkonturabschnitte A₁, A₂ trennende Einsetznut 27 der Steg 24 angeordnet. Dieser dient bei einer Montage von zwei Sammelhalterungen in einer Rücken-an-Rücken-Anordnung als Montagehilfe, da die Oberseite des Steges 17 mit den Tiefsten der weiblichen Verbinder W₁, W₂ der angrenzenden Anreihkonturabschnitte A₁, A₂ fluchtet und diese Oberseite daher als Anlagefläche dient, auf der die Oberseiten eines männlichen Verbinders M₁, M₂ eines Anreihkonturabschnittes einer weiteren Sammelhalterung anliegen. Bei dem dargestellten Ausführungsbeispiel ist in den Steg 24 eine Befestigungsöffnung 29 eingebracht, mit der die Sammelhalterung 1 auch ohne Verwendung des Befestigungsadapters 10 an einem Befestigungsgrund montiert werden kann.

Zum Verbinden der Sammelhalterung 1 mit einer weiteren, identischen Sammelhalterung in einer Rücken-an-Rücken-Anordnung zueinander werden zwei Sammelhalterungen 1 mit ihren Rücken aneinandergrenzend versetzt zueinander angeordnet, so dass jeweils ein Anreihkonturabschnitt der einen Sammelhalterung in die Einsetznut 27 der anderen Sammelhalterung eingreift. Durch translatorisches Verschieben der beiden Sammelhalterungen 1 gegeneinander werden die beiden Sammelhalterungen 1 zusammengefügt. Bei diesem Fügevorgang werden die miteinander in einer fluchtenden Anordnung befindlichen Verbinder miteinander in Eingriff gestellt, mithin die männlichen Verbinder der beiden Anreihkonturabschnitte in die weiblichen Verbinder eingeschoben. Somit kann die Sammelhalterung 1 trotz zunächst angeformtem Befestigungsadapter mit einer anderen Sammelhalterung in einer Rücken-an-Rücken-Anordnung montiert werden.

Die Erfindung ist vorstehend anhand eines Ausführungsbeispiels beschrieben worden. Ohne den Umfang der Ansprüche zu verlassen, ergeben sich für einen Fachmann zahlreiche weitere Ausgestaltungen, die Erfindung zu verwirklichen.

### Bezugszeichenliste

- 1: Sammelhalterung
- 2: Rückenschenkel
- 3: Quersteg
- 4: Quersteg
- 5: Verschlussschenkel
- 6: Verschlussabschnitt
- 7: Schenkelteil
- 8: Rastverschlussteil
- 9: Verschlussteil
- 10: Befestigungsadapter
- 11, 11.1: Filmscharnier
- 12: Befestigungsöffnung
- 13: Verriegelungsschuh
- 14: Montageplatte
- 15: Distanzstück
- 16: Riegelplatte
- 17: Adapternut
- 18: Adapternut
- 19: Durchgriffsabschnitt
- 20: Hinterschnitt
- 21: Anreihkontur
- 22: Einsetzabschnitt
- 23: Verriegelungsabschnitt
- 24: Steg
- 25: Rastwulst
- 26: Rastausnehmung
- 27: Einsetznut
- 28: Oberfläche
- 29: Befestigungsöffnung

- A₁, A₂: Anreihkonturabschnitt
- M₁, M2: männlicher Verbinder
- W₁, W₂,: weiblicher Verbinder
- R: Rückseite
- S₁, S₂: Stützwulst
- V: Verbindungsabschnitt

## Patentansprüche

1. Installationsteil zum Halten von Installationsleitungen mit einer zumindest bereichsweise hinterschnittenen Adapternut (17, 18) zum Anschließen eines Befestigungsadapters (10) an das Installationsteil (1) zur Montage desselben an einem Befestigungsgrund und mit einem daran unter Zwischenschaltung wenigstens eines flexiblen Streifens (11, 11.1) gelenkig angeformten Befestigungsadapter (10), welcher Befestigungsadapter (10) über einen Verriegelungsschuh (13) zum Einsetzen in die Adapternut (17, 18) des Installationsteils (1) verfügt oder als solcher ausgebildet ist, in welcher Adapternut (17, 18) der Verriegelungsschuh (13) formschlüssig in Lastaufnahmerichtung gehalten ist, **dadurch gekennzeichnet, dass** der Befestigungsadapter (10) durch den zumindest einen flexiblen Streifen (11, 11.1) dergestalt an das Installationsteil (1) angeschlossen und der flexible Streifen (11, 11.1) eine solche Länge aufweist, dass die Länge des flexiblen Streifens (11, 11.1) eine Schwenkbewegung zwischen dem Installationsteil (1) und dem Befestigungsadapter (10) zulässt, in deren Zuge das Installationsteil (1) zur Ausbildung einer Abstützanordnung zur Anlage an dem Verriegelungsschuh (13) gelangt, bei welcher Abstützanordnung das Installationsteil (1) einen zweiarmigen Hebel bildet, an dessen einem Arm der zumindest eine flexible Streifen (11, 11.1) angeformt ist und dieser bei weiterem Schwenken des Installationsteils (1) gegenüber dem Befestigungsadapter (10) zum Abtrennen desselben von dem Befestigungsadapter (10) unter Zugspannung stellbar ist.

2. Installationsteil nach Anspruch 1, **dadurch gekennzeichnet, dass** der Befestigungsadapter (10) über eine obere Kante des Installationsteils (1) abragend durch den zumindest einen flexiblen Streifen (11, 11.1) gehalten ist.

3. Installationsteil nach Anspruch 1 oder 2, **dadurch gekennzeichnet, dass** der Befestigungsadapter (10) eine an einem Befestigungsgrund anzulegende Montageplatte (14) umfasst, an der der Verriegelungsschuh (13) angeformt ist, der seinerseits über ein an der Montageplatte (14) angeformtes Distanzstück (15) und über eine an seiner der Montageplatte (14) gegenüberliegenden Seite, das Distanzstück (15) als solches überkragende Riegelplatte (16) zum Eingreifen in den Hinterschnitt (20) der Adapternut angeformt ist.

4. Installationsteil nach einem der Ansprüche 1 bis 3, **dadurch gekennzeichnet, dass** der zumindest eine flexible Streifen (11, 11.1) eine materialgeschwächte Sollbruchstelle aufweist.

5. Installationsteil nach einem der Ansprüche 1 bis 4, **dadurch gekennzeichnet, dass** der zumindest eine flexible Streifen (11, 11.1) als Filmscharnier ausgeführt ist.

6. Installationsteil nach einem der Ansprüche 1 bis 5, **dadurch gekennzeichnet, dass** der Befestigungsadapter (10) unter Zwischenschaltung von zwei parallel zueinander angeordneten flexiblen. Streifen (11, 11.1) an das Installationsteil (1) angeformt ist.

7. Installationsteil nach einem der Ansprüche 1 bis 6, **dadurch gekennzeichnet, dass** das Distanzstück (15) an zumindest einer seiner zu den die Adapternut (17, 18) des Installationsteils (1) einfassenden Wände weisenden Seite ein erstes Element (25) einer Rastfixierung und die zur Anlage an dieser Seite des Distanzstücks (15) vorgesehene Wand der Adapternut (17, 18) das komplementäre Element (26) der Rastfixierung tragen.

8. Installationsteil nach Anspruch 7, **dadurch gekennzeichnet, dass** die beiden der Fügerichtung folgenden zueinander weisenden Wände der Adapternut (17, 18) ein solches komplementäres Element (26) einer Rastfixierung tragen.

9. Installationsteil nach Anspruch 8, **dadurch gekennzeichnet, dass** das Distanzstück (15) an seinen beiden jeweils zu einer die Adapternut (17, 18) des Installationsteils (1) einfassenden Wänden weisenden Seite jeweils ein erstes Element (25) einer Rastfixierung trägt.

## Claims

1. Installation part for holding installation lines with an adapter groove (17, 18) undercut at least in regions for connection of an attachment adapter (10) to the installation part (1) for mounting thereof to an attachment base, and with an attachment adapter (10) moulded in articulated fashion thereon with the interposition of at least one flexible strip (11, 11.1), which attachment adapter (10) has or is configured as a locking shoe (13) for insertion in the adapter groove (17, 18) of the installation part (1), in which adapter groove (17, 18) the locking shoe (13) is held by form fit in the load-receiving direction, **characterised in that** the attachment adapter (10) is connected to the installation part (1) by the at least one flexible strip (11, 11.1) and the flexible strip (11, 11.1) has a length such that the length of the flexible strip (11, 11.1) allows a pivot movement between the installation part (1) and the attachment adapter (10), as a result of which the installation part (1) comes to rest on the locking shoe (13) to form a support arrangement, in which support arrangement the installation part (1) forms a two-armed lever, on one arm of which the at least one flexible strip (11, 11.1) is moulded and which lever, on further pivoting of the installation part (1) relative to the attachment adapter (10), can be set to separate said part from the attachment adapter (10) under tensile stress.

2. Installation part according to claim 1, **characterised in that** the attachment adapter (10) is held protruding over an upper edge of the installation part (1) by the at least one flexible strip (11, 11.1).

3. Installation part according to claim 1 or 2, **characterised in that** the attachment adapter (10) comprises a mounting plate (14) which is to be laid on an attachment base and on which the locking shoe (13) is moulded, which in turn is formed for engagement in the undercut (20) of the adapter groove by way of a spacer piece (15) formed on the mounting plate (14) and by way of a locking plate (16) protruding over the actual spacer piece (15) on its side opposite the mounting plate (14).

4. Installation part according to any one of claims 1 to 3, **characterised in that** the at least one flexible strip (11, 11.1) has a nominal break point of weakened material.

5. Installation part according to any one of claims 1 to 4, **characterised in that** the at least one flexible strip (11, 11.1) is configured as a film hinge.

6. Installation part according to any one of claims 1 to 5, **characterised in that** the attachment adapter (10) is moulded onto the installation part (1) with the interposition of two flexible strips (11, 11.1) arranged parallel to one another.

7. Installation part according to any one of claims 1 to 6, **characterised in that** the spacer piece (15), at least on its side having walls bordering the adapter groove (17, 18) of the installation part (1), carries a first element (25) of a catch fixing, and the wall of the adapter groove (17, 18) provided to rest on this side of the spacer piece (15) carries the complementary element (26) of the catch fixing.

8. Installation part according to claim 7, **characterised in that** the two walls of the adapter groove (17, 18) facing towards each other following the joining direction carry such a complementary element (26) of a catch fixing.

9. Installation part according to claim 8, **characterised in that** the spacer piece (15), on both its sides having walls bordering the adapter groove (17, 18) of the installation part (1), carries a first element (25) of a catch fixing.

## Revendications

1. Élément d'installation pour maintenir des lignes d'installation comportant au moins sur certaines zones une rainure (17, 18) d'adaptateur contre-dépouillée destinée à raccorder un adaptateur (10) de fixation sur l'élément d'installation (1) afin de monter ce dernier sur une base porteuse et comportant un adaptateur (10) de fixation articulé moulé sur ce dernier par l'intermédiaire d'au moins une languette (11, 11.1) flexible, lequel adaptateur (10) de fixation dispose d'un sabot (13) de verrouillage destiné à être engagé dans la rainure (17, 18) d'adaptateur de l'élément d'installation (1) ou est configuré en tant que tel, dans laquelle rainure (17, 18) d'adaptateur le sabot (13) de verrouillage est maintenu par complémentarité de forme, dans le sens d'absorption de la charge, **caractérisé en ce que** l'adaptateur (10) de fixation est raccordé à l'élément d'installation (1) par l'au moins une languette (11, 11.1) flexible de telle manière et que la languette (11, 11.1) flexible a une longueur telle, que la longueur de la languette (11, 11.1) flexible permet un mouvement de basculement entre l'élément d'installation (1) et l'adaptateur (10) de fixation grâce auquel l'élément d'installation (1) se met en appui sur le sabot (13) de verrouillage afin de former un agencement d'appui, dans lequel agencement d'appui l'élément d'installation (1) forme un levier à deux bras, au moins une languette (11, 11.1) flexible étant moulée sur l'un de ces bras, et que ledit bras peut être mis sous une tension de traction en poursuivant le basculement de l'élément d'installation (1) par rapport à l'adaptateur (10) de fixation, afin de provoquer sa séparation de l'adaptateur (10) de fixation.

2. Élément d'installation selon la revendication 1, **caractérisé en ce que** l'adaptateur (10) de fixation est maintenu en saillie au-dessus d'une arête supérieure de l'élément d'installation (1) par l'au moins une languette (11, 11.1) flexible.

3. Élément d'installation selon la revendication 1 ou 2, **caractérisé en ce que** l'adaptateur (10) de fixation comprend une plaque de montage (14) à poser contre une base porteuse, sur laquelle le sabot (13) de verrouillage est moulé, lequel est pour sa part moulé sur la plaque de montage (14) par l'intermédiaire d'un écarteur (15) moulé, et moulé sur la face opposée à ladite plaque de montage (14), en encorbellement par rapport à l'écarteur (15), par l'intermédiaire d'une plaque de verrouillage (16), afin de permettre un engagement dans la contre-dépouille (20) de la rainure d'adaptateur.

4. Élément d'installation selon l'une des revendications 1 à 3, **caractérisé en ce que** l'au moins une languette (11, 11.1) flexible présente une zone de cassure imposée par une faiblesse du matériau.

5. Élément d'installation selon l'une des revendications 1 à 4, **caractérisé en ce que** l'au moins une languette (11, 11.1) flexible est conformée en tant qu'articulation pelliculaire.

6. Élément d'installation selon l'une des revendications 1 à 5, **caractérisé en ce que** l'adaptateur (10) de fixation est moulé sur l'élément d'installation (1) par l'intermédiaire de deux languettes (11, 11.1) flexibles disposées parallèlement l'une par rapport à l'autre.

7. Élément d'installation selon l'une des revendications 1 à 6, **caractérisé en ce que** l'écarteur (15) supporte sur au moins une face orientée vers les parois délimitant la rainure (17, 18) d'adaptateur de l'élément d'installation (1) un premier élément (25) d'une fixation à enclenchement et que la paroi de la rainure (17, 18) d'adaptateur prévue pour se mettre en appui sur cette face de l'écarteur (15) supporte l'élément complémentaire (26) de la fixation à enclenchement.

8. Élément d'installation selon la revendication 7, **caractérisé en ce que** les deux parois de la rainure (17, 18) d'adaptateur orientées l'une vers l'autre en suivant le sens du joint supportent un tel élément complémentaire (26) d'une fixation à enclenchement.

9. Élément d'installation selon la revendication 8, **caractérisé en ce que** l'écarteur (15) supporte respectivement, sur ses deux faces orientées chacune vers les parois entourant la rainure (17, 18) d'adaptateur de l'élément d'installation (1), un premier élément (25) d'une fixation à enclenchement.
